# EUROPÄISCHE PATENTSCHRIFT

(11) **EP 0 842 397 B1**
(45) Veröffentlichungstag und Bekanntmachung des Hinweises auf die Patenterteilung: **19.06.2002**
(21) Anmeldenummer: 96927586.6
(22) Anmeldetag: 23.07.1996
(51) Int. Cl.: G01D 5/249

(54) **SCHALTVERFAHREN ZUM ERZEUGEN EINES SCHALTSIGNALS BEI ERREICHEN EINER SCHALTBEDINGUNG UND ZUGEHÖRIGE SCHALTUNG**
METHOD OF GENERATING A SWITCHING SIGNAL ON REACHING A PARTICULAR CONDITION, AND CIRCUIT FOR CARRYING OUT THE METHOD
PROCEDE DE COMMUTATION DESTINE A PRODUIRE UN SIGNAL DE COMMUTATION LORSQU'UNE CONDITION DE COMMUTATION EST REMPLIE, ET CIRCUIT ASSOCIE

(30) Priorität: 31.07.1995 EP 95112026
(43) Veröffentlichungstag der Anmeldung: 20.05.1998
(73) Patentinhaber: SIEMENS AKTIENGESELLSCHAFT, 80333 München (DE)
(72) Erfinder: KÜNZEL, Richard, D-90592 Schwarzenbruck (DE); SCHWANDNER, Otto, D-90768 Fürth (DE)
(86) Internationale Anmeldenummer: EP9603250
(87) Internationale Veröffentlichungsnummer: WO9705455

(56) Entgegenhaltungen:
- EP-A- 0 286 322
- US-A- 5 231 596

## Beschreibung

Die vorliegende Erfindung betrifft ein Schaltverfahren zum Erzeugen eines Schaltsignals bei Erreichen einer Schaltbedingung,
- wobei einer Auswerteschaltung zeitlich nacheinander eine Folge von aus jeweils mindestens zwei Bit bestehenden Messungen zugeführt wird,
- wobei die Messungen gemäß ihrer zeitlichen Abfolge auf die Schaltbedingung überprüft werden und das Schaltsignal erzeugt wird, sobald die Schaltbedingung erstmals erreicht wird,
sowie die zugehörige Positionsauswerteschaltung,
- mit einem Eingangskanal, über den der Positionsauswerteschaltung zeitlich nacheinander eine Folge von aus jeweils mindestens zwei Bit bestehenden Messungen zuführbar ist, und
- mit einem mit dem Eingangskanal verbundenen Vergleicher, der die Messungen nacheinander auf eine Schaltbedingung überprüft und bei Erfüllen der Schaltbedingung ein Schaltsignal erzeugt.

Absolutweggeber erfassen die Position eines verfahrbaren Elements, z.B. eines verfahrbaren Schlittens, und melden diese an eine übergeordnete Steuerung weiter. Jede Position innerhalb des Verfahrweges wird dabei z.B. auf 12 Bit genau erfaßt. Jeder Position des verfahrbaren Elements entspricht also genau ein Bitmuster und umgekehrt entspricht jedem Bitmuster - innerhalb der Meßgenauigkeit - ein ganz bestimmter Abschnitt des Verfahrweges. An einer Position des Verfahrweges liefert der Absolutweggeber den Wert "0". Diese Stelle muß dabei nicht an einem der Enden des Verfahrweges angeordnet sein, sondern kann an beliebiger Stelle liegen. Das Durch-laufen der Position, an welcher der Absolutweggeber den Wert "0" ausgibt, wird als Nulldurchgang bezeichnet.

Wenn das Verfahrelement eine beliebige neue Position innerhalb des Verfahrweges anfahren soll, wird zunächst die momentane IST-Position, die aufgrund des vom Absolutweggeber gelieferten Bitmusters bekannt ist, mit der neuen SOLL-Position verglichen. Aufgrund des Vergleichs der beiden Positionen miteinander wird dann bestimmt, in welche Richtung das Verfahrelement verfahren werden muß. Ferner wird die neue SOLL-Position in ihr korrespondierendes SOLL-Bitmuster umgewandelt und in einen Vergleicher geladen. Der Absolutweggeber erfaßt laufend die IST-Postition des Verfahrelements und meldet in zeitkonstanten Abständen das hierzu korrespondierende Bitmuster an den Vergleicher. Der Vergleicher gibt ein Schaltsignal an das Stellglied aus, welches das Verfahrelement verfahrt, wenn das IST-Bitmuster erstmals kleiner oder größer als das SOLL-Bitmuster wird, je nach Verfahrrichtung. Die Schaltbedingung ist also, daß das IST-Bitmuster größer oder gleich bzw. kleiner oder gleich als das SOLL-Bitmuster wird.

In der Praxis ist es im Regelfall nicht möglich, das Verfahrelement bei Erreichen der neuen SOLL-Position abrupt zu stoppen. Im Regelfall wird daher der Vergleicher zunächst nicht mit dem Bitmuster geladen, welches der neuen SOLL-Position entspricht, sondern mit dem Bitmuster, welches einer Position entspricht, die in Verfahrrichtung ein gewisses Stück vor der anzufahrenden SOLL-Position liegt. Bei Erreichen dieser Position wird das Verfahrelement zunächst von normaler Fahrt auf Schleichfahrt umgeschaltet, dann das Bitmuster in den Vergleicher geladen, welches der tatsächlichen SOLL-Position entspricht und der Antrieb, welcher das Verfahrelement verstellt, bei Erreichen der SOLL-Position völlig abgeschaltet. Diese Unterscheidungen sind für die im vorliegenden Fall gegebene Problematik jedoch irrelevant. Im folgenden wird daher stets angenommen, daß die SOLL-Position die Position ist, bei welcher der Vergleicher ansprechen soll. Das Ansprechen des Vergleichers kann dann, je nach Bedarf, das Umschalten des Stellantriebs auf Schleichfahrt oder das Stillsetzen des Stellantriebs auslösen.

Aufgrund der Tatsache, daß der Nulldurchgang des Absolutweggebers zwischen der neuen SOLL-Position und der IST-Position des Verfahrelements bei Vorgabe des neuen SOLL-Bitmusters liegen kann, ergeben sich jedoch mehrere Probleme. Zum einen kann der Vergleicher nicht sofort mit dem neuen SOLL-Bitmuster geladen werden, da erst der Nulldurchgang erfaßt werden muß. Ansonsten würde der Vergleicher nämlich sofort ansprechen, obwohl die anzufahrende Position noch nicht erreicht ist. Ferner spricht der Vergleicher auch an, wenn es nach dem Laden des Vergleichers zu einem versehentlichen Nulldurchgang des Absolutweggebers kommt. Das größte Problem stellt aber die Situation dar, bei der die SOLL-Position kurz vor dem Gebernulldurchgang liegt. Aufgrund der Abtastung kann es nämlich geschehen, daß die letzte Abtastung vor dem Nulldurchgang den Schaltpunkt nicht mehr erfaßt. In diesem Fall wird die SOLL-Position überfahren, ohne daß der Vergleicher anspricht.

Im Stand der Technik (EP-A-0 286 322, US-A-5 231 596) wird daher stets das vom Absolutweggeber gelieferte Bitmuster in die hierzu korrespondierende Position umgerechnet und mit der neuen SOLL-Position verglichen. Bei Erreichen bzw. Überschreiten der neuen SOLL-Position wird dann das Schaltsignal ausgegeben. Diese Vorgehensweise umgeht zwar die oben erwähnten Probleme beim Vergleich der Bitmuster miteinander, ist jedoch zeitaufwendig und umständlich. Ferner kann eine konstante Reaktionszeit nicht sicher gewährleistet werden.

Die Aufgabe der vorliegenden Erfindung besteht darin, ein Verfahren und die zugehörige Schaltung anzugeben, bei welcher das neue SOLL-Bitmuster sofort in den Vergleicher geladen werden kann und dennoch weder die Probleme bei einem versehentlichen Überfahren des Nulldurchgangs noch bei einer SOLL-Position nahe am Gebernulldurchgang auftreten können.

Die Aufgabe wird für das Verfahren durch die beiden kennzeichnenden Merkmale des Anspruchs 1 und für die Schaltung durch die Merkmale 3 und 4 des Anspruchs 2 gelöst. Es werden also die beiden höchstwertigen Bits überwacht und auf Nulldurchgang erkannt, wenn die beiden höchstwertigen Bits von "00" auf "11" oder umgekehrt wechseln. In diesem Fall wird auch die Schaltbedingung gewechselt.

Weitere Vorteile und Einzelheiten ergeben sich aus der nachfolgenden Beschreibung eines Ausführungsbeispiels. Dabei zeigen:
- FIG 1 und 2: das Anfahren einer neuen SOLL-Position
- FIG 3: die Abbildung des Verfahrweges auf das Ausgangssignal des Absolutweggebers und
- FIG 4: die erfindungsgemäße Schaltung

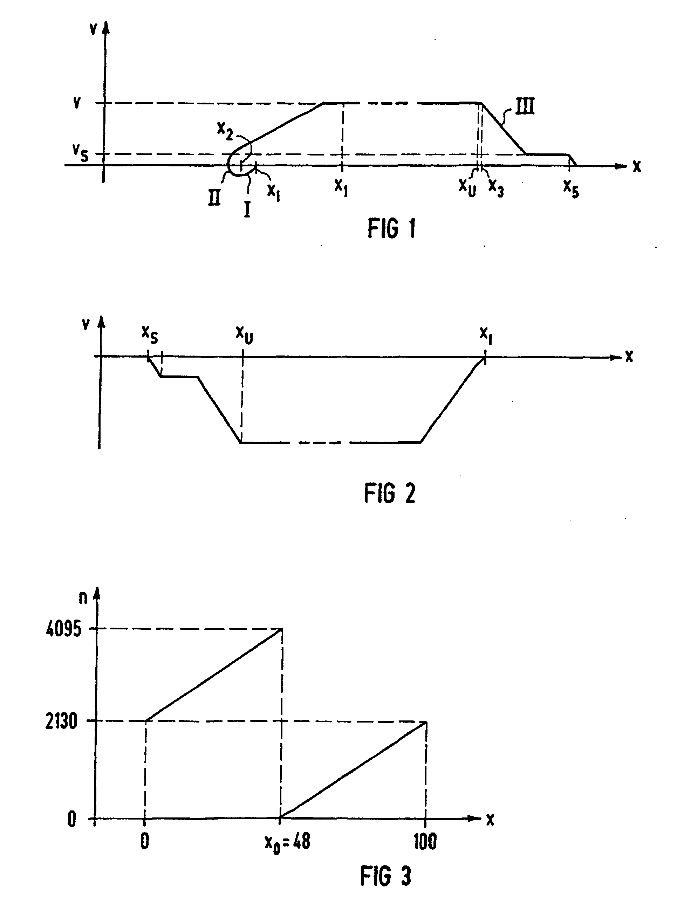

FIG 1 zeigt nun das Anfahren einer neuen SOLL-Position, wenn hierzu ein Verfahren in positiver Richtung erforderlich ist. Gemäß FIG 1 geschieht das Anfahren einer neuen SOLL-Position x_{S} aus der momentanen IST-Position x_{I} wie folgt: Zunächst wird die Bremse des Verfahrelements gelöst. Dadurch wird das Verfahrelement frei und bewegt sich beispielsweise schwerkraftgetrieben nach links. Dies entspricht dem Abschnitt I der in FIG 1 dargestellten Kurve. Unmittelbar danach wird der Antrieb eingeschalten, der das Verfahrelement zunächst gemäß Kurvenabschnitt II bremst und sodann auf die volle Verfahrgeschwindigkeit v beschleunigt. Diese Geschwindigkeit v wird beibehalten, bis das Verfahrelement die Umschaltposition x_{U} erreicht. Bei Erreichen dieser Position x_{U} wird das Verfahrelement gemäß Kurvenabschnitt III verzögert, bis es sich nur noch mit der Schleichgeschwindigkeit v_{S} bewegt. Bei Detektie ren der tatsächlich gewünschten SOLL-Position x_{S} wird dann der Antrieb abgeschaltet. Unmittelbar danach wird die Bremse des Verfahrelements angezogen, so daß dieses bei der neuen SOLL-Position x_{S} arretiert wird.

FIG 2 zeigt das Anfahren einer neuen SOLL-Position x_{S} von der momentanen IST-Position x_{I} aus, wenn hierzu ein Verfahren des Verfahrelements in negativer Richtung erforderlich ist. Bis auf die Tatsache, daß das Verfahrelement nach dem Lösen der Bremse sich sofort in die negative Richtung bewegt und nicht erst durch den Antrieb eine Richtungsumkehr bewirkt werden muß, ist die Vorgehensweise völlig analog zu der von FIG 1.

FIG 3 zeigt nun beispielhaft die vom Absolutweggeber gelieferten Bitmuster n in Abhängigkeit vom Verfahrweg x. Dabei ist (willkürlich) angenommen, daß das Verfahrelement zwischen einer Position "0" und einer Position "100" verfahrbar ist und daß der Absolutweggeber eine Auflösung von 12 Bit besitzt. Die möglichen Bitmuster n reichen damit von 0 = 0000 0000 0000₂ bis 4095 = 1111 1111 1111₂. Der besseren Anschaulichkeit halber sind die Bitmuster n in FIG 3 in Dezimalwerten dargestellt. Wie aus FIG 3 ferner ersichtlich ist, ist angenommen, daß der Gebernulldurchgang bei x₀ = 48 liegt. Er könnte aber auch an anderer Stelle liegen.

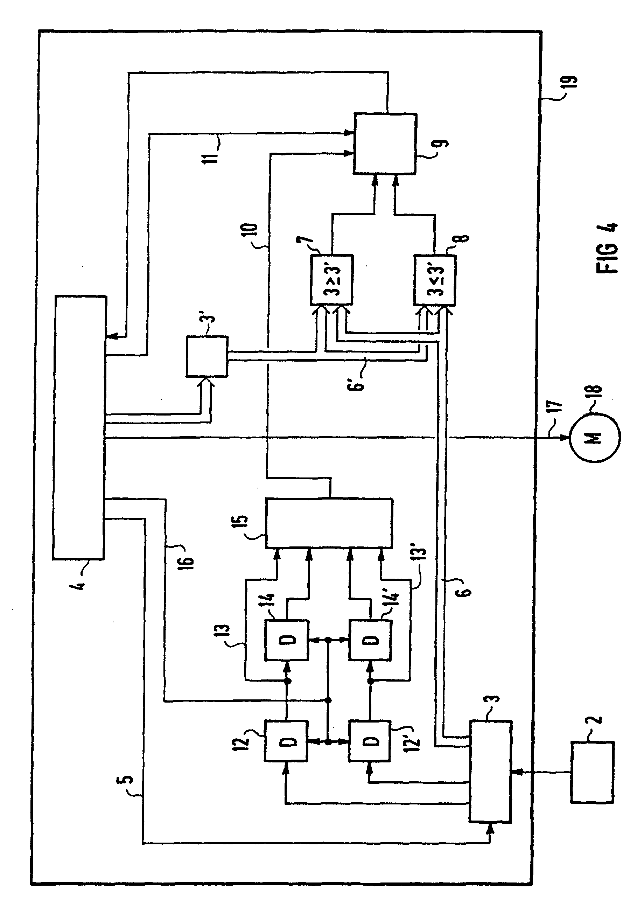

FIG 4 zeigt nun die Auswerteschaltung, mittels derer die Verarbeitung der vom Absolutweggeber gelieferten Bitmuster erfolgt. Gemäß FIG 4 liefert die Lageerfassung des Absolutweggebers 2 ein Bitmuster, das z.B. über ein SSI (= serial synchronous interface) an das Register 3 weitergegeben wird. Der Auswerteschaltung wird also zeitlich nacheinander eine Folge von Messungen zugeführt. Aufgrund der relativ langsamen seriellen Datenübertragung wird der Auswerteschaltung aber nicht jedes Bitmuster übermittelt, sondern z.B. nur jedes zehnte.

Das Register 3 wird von der Logikeinheit 4 über die Steuerleitung 5 periodisch angesteuert. Bei jeder Ansteuerung wird der Inhalt des Registers 3 ausgelesen und über die Datenleitungen 6 den Vergleichern 7 und 8 zugeführt. Den Vergleichern 7 und 8 wird ferner über die Datenleitungen 6' der Inhalt des Vergleichsregisters 3' zugeführt. Das Vergleichsregister 3' wird von der Logikeinheit 4 zu Beginn eines jeden Verfahrvorgangs mit dem Bitmuster n geladen, welches der nächsten Position entspricht, bei welcher eine Reaktion erfolgen soll. Es wird also beispielsweise die nächste Umschaltposition x_{U} oder die nächste SOLL-Position x_{S} in das Vergleichsregister 3' geladen.

Der Vergleicher 7 gibt ein Schaltsignal aus, wenn der Inhalt des Registers 3 größer oder gleich dem Inhalt des Registers 3' ist. Der Vergleicher 8 gibt ein Schaltsignal aus, wenn der Inhalt des Registers 3 kleiner oder gleich dem Inhalt des Registers 3' ist. Die Schaltbedingung des Vergleichers 7 ist also, daß der Inhalt des Registers 3 größer oder gleich dem Inhalt des Vergleichsregisters 3' ist. Umgekehrt ist die Schaltbedingung des Vergleichers 8 - bis auf den singulären Fall der Gleichheit - komplementär zu der des Vergleichers 7.

Die Ausgangssignale der Vergleicher 7 und 8 werden dem Auswahlschalter 9 zugeführt, der eines der beiden Schaltsignale auswählt und der Logikeinheit 4 zuführt. Wenn am Ausgang des durchgeschalteten Vergleichers 7 bzw. 8 ein Schaltsignal auftritt, weil die korrespondierende Schaltbedingung erfüllt worden ist, registriert dies die Logikeinheit 4 und gibt ein entsprechendes Steuersignal über die Steuerleitung 17 an das Stellglied 18, hier einen Motor, aus, welcher das Verfahrelement antreibt, um diesen abzubremsen oder zu stoppen. Wenn die Logikeinheit 4 kein Schaltsignal erhält, wird der Motor 18 angesteuert wie zuvor.

Der Auswahlschaltung werden über die Steuerleitungen 10 und 11 zwei Steuersignale zugeführt. Über die Steuerleitung 11 legt die Logikeinheit 4 fest, welches der beiden von den Vergleichern 7 und 8 gelieferten Schaltsignale bei Beginn eines Verfahrvorgangs ausgewählt werden soll. Bei jedem Gebernulldurchgang wird der Auswahlschaltung 9 über die Steuerleitung 10 aber ein Umschaltsignal zugeführt, welches bewirkt, daß die Auswahlschaltung 9 umgeschaltet wird. Wurde vor dem Zuführen des Umschaltsignals über die Steuerleitung 10 also das Schaltsignal des Vergleichers 7 durchgeschaltet, so wird bei und nach dem Übertragen des Umschaltsignals das Schaltsignal des Vergleichers 8 durchgeschaltet und umgekehrt. Im Ergebnis wird die Schaltbedingung also gewechselt.

Das Erzeugen des Umschaltsignals geschieht wie folgt: Bei jedem Auslesen des Registers 3 wird zusätzlich das höchstwertige Bit dem D-Flipflop 12 zugeführt. Das Ausgangssignal des D-Flipflops 12 wird einerseits über die Datenleitung 13 direkt und andererseits über ein weiteres D-Flipflop 14 der Logikschaltung 15 zugeführt. Bezüglich des zweithöchsten Bits geschieht das gleiche mittels der D-Flipflops 12' und 14' sowie der Datenleitung 13'. Die D-Flipflops 12,12',14,14' werden dabei jeweils gemeinsam über die Steuerleitung 16 angesteuert, wenn ein neuer Istwert in das Register 3 eingelesen worden ist.

Dadurch stehen der Logikschaltung 15 zu jedem Zeitpunkt die beiden höchstwertigen Bits der jeweiligen Messung und die beiden höchstwertigen der unmittelbar vorangegangenen Messung zur Verfügung. Die Logikschaltung 15 vergleicht die vier ihr zur Verfügung stehenden Bits miteinander. Sie gibt ein Umschaltsignal an die Auswahlschaltung 9 aus, wenn eine der beiden folgenden Bedingungen vorliegt:
- Sowohl das höchstwertige als auch das zweithöchstwertige Bit haben von "0" auf "1" gewechselt oder
- sowohl das höchstwertige als auch das zweithöchstwertige Bit haben von "1" auf "0" gewechselt.

Genau dieser Wechsel nämlich ist ein eindeutiges Erkennungszeichen für einen Gebernulldurchgang.

Wenn also das Umschaltsignal vorliegt, wird durch das Umschalten vom Vergleicher 8 auf den Vergleicher 7 oder umgekehrt im Ergebnis die Schaltbedingung getoggelt. Es wird namlich vom Vergleich "größer gleich" auf "kleiner gleich" umgeschaltet. Dies ist quasi ein Komplementieren der Schaltbedingung. Daß bei exakter Übereinstimmung der Registerinhalte der Register 3 und 3' beide Vergleicher 7,8 ansprechen, ist ein singulärer Einzelfall, der im Rahmen der vorliegenden Erfindung vernachlässigbar ist.

Mit der Schaltung gemäß FIG 4 werden die Probleme des Standes der Technik gelöst. Im Einzelnen:

Wenn beispielsweise von der Position x_{I} gemäß FIG 1 die Position x_{S} gemäß FIG 1 angefahren werden soll und der Gebernulldurchgang x₀ bei der mit x₁ bezeichneten Stelle liegt, so wird
- an den Motor 18 über die Steuerleitung 17 der Befehl "Verfahrelement nach rechts verfahren" ausgegeben,
- das Vergleichsregister 3' mit dem Bitmuster n_{U} geladen, welches der Umschaltposition x_{U} entspricht und
- über die Steuerleitung 11 der Befehl ausgegeben, zunächst den Vergleicher 8 durchzuschalten.

Solange das Verfahrelement sich links vom Gebernulldurchgang x₀ = x₁ befindet ist - siehe FIG 3 - der Inhalt des Registers 3 stets größer als der des Vergleichsregisters 3'. Der Vergleicher 8 spricht daher nicht an. Wird der Gebernulldurchgang x₀ = x₁ hingegen überfahren, so ist zunächst der Inhalt des Registers 3 kleiner als der des Vergleichsregisters 3'.

Der Vergleicher 8 spricht daher sofort an. Bei Erkennen des Nulldurchgangs wird aber die Auswahlschaltung 9 umgeschaltet, so daß bereits beim ersten Vergleich nach dem Gebernulldurchgang das Ausgangssignal des Vergleichers 7 an die Logikeinheit 4 durchgeschaltet wird. Da nunmehr aber zunächst der Inhalt des Registers 3 - vergleiche wieder FIG 3 - kleiner als der des Vergleichsregisters 3' ist, spricht der Vergleicher 7 vorerst nicht an. Erst nach dem Überfahren der Umschaltposition x_{U} ist die Schaltbedingung des Vergleichers 7 erfüllt so daß, wie gewünscht, bei Überfahren der Umschaltposition x_{U} ein Schaltsignal an die Logikeinheit 4 gemeldet wird, welche dann über die Steuerleitung 17 den Motor 18 auf Schleichfahrt schaltet.

Wie bereits in Verbindung mit FIG 1 erwähnt, kann es bei Beginn eines Verfahrvorgangs zu nicht vorbekannten Bewegungen des Verfahrelements kommen. Wenn nun beispielsweise der Gebernulldurchgang bei x₀ = x₂ (siehe FIG 1) liegt, derzeitige IST-Position x_{I} und neue SOLL-Position x_{S} also vom Gebernulldurchgang ausgesehen auf der gleichen Seite liegen, wird wieder das zur Umschaltposition x_{U} korrespondierende Bitmuster n_{U} in das Vergleichsregister 3' geladen. Diesmal wird aber sofort der richtige Vergleicher 7 aufgrund eines entsprechenden Steuersignals über die Steuerleitung 11 durchgeschaltet. Wenn es nun wie in FIG 1 dargestellt zu einem unkontrollierten Überfahren des Gebernulldurchgangs bei x₀ = x₂ kommt, spricht wieder die Logikschaltung 15 an und schaltet anstelle des Vergleichers 7 den Vergleicher 8 durch. Beim zweiten Gebernulldurchgang in der Beschleunigungsphase wird wieder auf den Vergleicher 7 umgeschaltet.

Das größte Problem hingegen stellte sich im Stand der Technik, wenn der Gebernulldurchgang unmittelbar hinter der Umschaltposition x_{U} liegt. Beispielsweise könnte der Gebernulldurchgang - siehe FIG 1 - bei x₀ = x₃ liegen. In diesem Fall könnte es ohne Vergleicherumschaltung geschehen, daß bei zwei aufeinanderfolgenden Registerinhalten des Registers 3 der eine noch vor dem Umschaltpunkt x_{U} und der andere bereits hinter dem Gebernulldurchgang x₀ = x₃ liegt. In diesem Fall wäre ohne Umschalten - siehe FIG 3 - beim Vergleich des ersten der beiden Registerinhalte mit dem des Vergleichsregister 3' die Schaltbedingung noch nicht erfüllt, bei dem zweiten aufgrund des Gebernulldurchgangs und der dadurch von vorneherein geringeren Zahlenwerte bereits nicht mehr. Der Umschaltpunkt x_{U} würde also ohne Schaltreaktion überfahren. Aufgrund des Umschaltens vom Vergleicher 7 auf den Vergleicher 8 hingegen wird nunmehr die quasi-komplementierte Schaltbedingung abgeprüft, so daß bei der ersten Messung nach Umschaltposition x_{U} und Gebernulldurchgang x₀ = x₃ die Schaltbedingung des Vergleichers 8 erfüllt ist, so daß dieser die Schaltreaktion auslöst.

Mit dem erfindungsgemäßen Schaltverfahren bzw. der zugehörigen Positionsauswerteschaltung können also direkt die vom Absolutweggeber 2 gelieferten Bitmustern verarbeitet werden, ohne diese erst in die korrespondierenden Positionen x umrechnen zu müssen. Dadurch kann zum einen die Reaktionszeit der Schaltung unabhängig vom neuen Sollwert x_{S} gehalten werden, zum anderen ist die Reaktionszeit sehr gering.

Die erfindungsgemäße Schaltung kann wahlweise diskret aufgebaut sein oder in einen integrierten Schaltkreis 19 integriert sein.

## Patentansprüche

1. Schaltverfahren zum Erzeugen eines Schaltsignals bei Erreichen einer Schaltbedingung,
- wobei einer Auswerteschaltung zeitlich nacheinander eine Folge von aus jeweils mindestens zwei Bit bestehenden Messungen zugeführt wird,
- wobei die Messungen gemäß ihrer zeitlichen Abfolge auf die Schaltbedingung überprüft werden und das Schaltsignal erzeugt wird, sobald die Schaltbedingung erstmals erreicht wird,
**dadurch gekennzeichnet,**
- **daß** die beiden höchstwertigen Bits einer jeden Messung miteinander und mit den beiden höchstwertigen Bits der unmittelbar vorangegangenen Messung verglichen werden und
- **daß** die Schaltbedingung gewechselt wird, wenn die beiden höchstwertigen Bits der jeweiligen Messung den gleichen Wert aufweisen und wenn die beiden höchstwertigen Bits jeder Messung sich beide von den beiden höchstwertigen Bits der unmittelbar vorangegangenen Messung unterscheiden.

2. Positionsauswerteschaltung,
- mit einem Eingangskanal (3), über den der Positionsauswerteschaltung zeitlich nacheinander eine Folge von aus jeweils mindestens zwei Bit bestehenden Messungen zuführbar ist,
- mit einem mit dem Eingangskanal (3) verbundenen Vergleicher (7,8), der die Messungen nacheinander auf eine Schaltbedingung überprüft und bei Erfüllen der Schaltbedingung ein Schaltsignal erzeugt,
- mit einer mit dem Eingangskanal (3) verbundenen Speicherschaltung (14,14'), in der zumindest die beiden höchstwertigen Bits der Messung abspeicherbar sind, die der Positionsauswerteschaltung unmittelbar vor der zuletzt zugeführten Messung zugeführt wurde, und
- mit einer sowohl mit dem Eingangskanal (3) als auch der Speicherschaltung (14,14') verbundenen Nulldurchgangserfassungsschaltung (15), welche mit einem Umschalteingang (9) des Vergleichers (7,8) verbunden ist und welche ein Umschaltsignal zum Wechseln der Schaltbedingung ausgibt, wenn die beiden höchstwertigen Bits der zuletzt zugeführten Messung den gleichen Wert aufweisen und wenn die beiden höchstwertigen Bits der zuletzt zugeführten Messung sich beide von den in der Speicherschaltung (14,14') abgespeicherten beiden höchstwertigen Bits der unmittelbar zuvor zugeführten Messung unterscheiden.

3. Positionsauswerteschaltung nach Anspruch 2,
**dadurch gekennzeichnet, daß** sie in einen integrierten Schaltkreis (19) integriert ist.

## Claims

1. Switching method for producing a switching signal on reaching a switching condition,
- an evaluation circuit being supplied successively in time with a sequence of measurements which each comprise at least two bits,
- the measurements being checked for the switching condition in accordance with their time sequence, and the switching signal being produced as soon as the switching condition is reached for the first time,
**characterized**
- **in that** the two most significant bits of each measurement are compared with one another and with the two most significant bits of the immediately preceding measurement and
- **in that** the switching condition is changed when the two most significant bits of the respective measurement have the same value and when the two most significant bits of each measurement both differ from the two most significant bits of the immediately preceding measurement.

2. Position evaluation circuit,
- having an input channel (3) via which the position evaluation circuit can be supplied successively in time with a sequence of measurements which each comprises at least two bits
- having a comparator (7, 8) which is connected to the input channel (3), checks the measurements for a switching condition successively and produces a switching signal when the switching condition is satisfied,
- having a memory circuit (14, 14') which is connected to the input channel (3) and in which at least the two most significant bits of that measurement can be stored which was supplied to the position evaluation circuit immediately before the last supplied measurement, and
- having a zero crossing detection circuit (15) which is connected both to the input channel (3) and to the memory circuit (14, 14'), is connected to a changeover input (9) of the comparator (7, 8) and emits a changeover signal to change the switching condition when the two most significant bits of the last supplied measurement have the same value and when the two most significant bits of the last supplied measurement both differ from the two most significant bits, which are stored in the memory circuit (14, 14'), of the immediately previously supplied measurement.

3. Position evaluation circuit according to Claim 2, **characterized in that** said position evaluation circuit is integrated in an integrated circuit (19).

## Revendications

1. Procédé de commutation destiné à produire un signal de commutation lorsqu'une condition de commutation est remplie,
- dans lequel on envoie à un circuit d'évaluation, successivement dans le temps, une suite de mesures constituées d'au moins deux bits à chaque fois,
- dans lequel on teste les mesures selon leur succession temporelle quant à la condition de commutation et on produit le signal de commutation dès que la condition de commutation est remplie pour la première fois,
**caractérisé par le fait que**
- on compare les deux bits de poids fort de chaque mesure entre eux et avec les deux bits de poids fort de la mesure immédiatement précédente, et
- on change la condition de commutation lorsque les deux bits de poids fort de la mesure respective ont la même valeur et lorsque les deux bits de poids fort de chaque mesure se distinguent tous les deux des deux bits de poids fort de la mesure immédiatement précédente.

2. Circuit d'évaluation de position,
- comportant un premier canal d'entrée (3) par l'intermédiaire duquel peut être envoyée au circuit d'évaluation de position, successivement dans le temps, une suite de mesures constituées d'au moins deux bits à chaque fois,
- comportant un comparateur (7, 8) qui est relié au canal d'entrée (3), qui teste les mesures successivement quant à une condition de commutation et qui produit un signal de commutation lorsque la condition de commutation est remplie,
- comportant un circuit de mémoire (14, 14') qui est relié au canal d'entrée (3) et dans lequel peuvent être mémorisés au moins les deux bits de poids fort de la mesure qui a été envoyée au circuit d'évaluation de mesure immédiatement avant la mesure envoyée en dernier lieu, et
- comportant un circuit de détection de passage par zéro (15) qui est relié aussi bien au canal d'entrée (3) qu'au circuit de mémoire (14, 14'), qui est relié à une entrée de basculement (9) du comparateur (7, 8) et qui délivre un signal de basculement pour le changement de la condition de commutation lorsque les deux bits de poids fort de la mesure envoyée en dernier lieu ont la même valeur et lorsque les deux bits de poids fort de la mesure envoyée en dernier lieu se distinguent tous les deux des deux bits de poids fort, mémorisés dans le circuit de mémoire (14, 14'), de la mesure envoyée immédiatement avant.

3. Circuit d'évaluation de position selon la revendication 2,
**caractérisé par le fait qu'**il est intégré dans un circuit intégré (19).
